(19) Europäisches Patentamt
European Patent Office
Office européen des brevets

(11) **EP 3 633 435 B1**

(12) **EUROPEAN PATENT SPECIFICATION**

(45) Date of publication and mention
of the grant of the patent:
**21.12.2022 Bulletin 2022/51**

(21) Application number: **17911344.4**

(22) Date of filing: **25.05.2017**

(51) International Patent Classification (IPC):
**G02B 27/02** (2006.01)          **H04N 5/64** (2006.01)
**H04N 5/74** (2006.01)          **H04N 9/31** (2006.01)
**G02B 27/01** (2006.01)

(52) Cooperative Patent Classification (CPC):
**G02B 27/017; G02B 27/02; H04N 5/64; H04N 5/74;
H04N 9/31**

(86) International application number:
**PCT/JP2017/019590**

(87) International publication number:
**WO 2018/216176 (29.11.2018 Gazette 2018/48)**

(54) **HEAD-MOUNTED DISPLAY DEVICE**

KOPFMONTIERTE ANZEIGEVORRICHTUNG

DISPOSITIF DE VISIOCASQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.04.2020 Bulletin 2020/15**

(73) Proprietor: **Shimadzu Corporation
Kyoto-shi, Kyoto 604-8511 (JP)**

(72) Inventor: **TANAKA, Masato
Kyoto-shi
Kyoto 604-8511 (JP)**

(74) Representative: **Mewburn Ellis LLP
Aurora Building
Counterslip
Bristol BS1 6BX (GB)**

(56) References cited:
**WO-A1-2016/181126     JP-A- H07 218 859
JP-A- S61 501 946       JP-A- 2002 542 409
JP-A- 2010 019 874      JP-A- 2010 019 874
JP-A- 2013 178 422      US-A- 5 309 169
US-A- 5 543 968         US-A- 5 722 091**

## Description

### TECHNICAL FIELD

The present invention relates to a display device for displaying image information or similar information as a virtual image in front of the eyes of a user, and more specifically, to a head mounted display device to be mounted on the head of a user when in use.

### BACKGROUND ART

In recent years, a type of display device which is generally called the "helmet mounted display" (which is hereinafter abbreviated as the "HMD") has been used in the operation of a helicopter, airplane or similar type of aircraft. In an HMD, an image displayed on a display element, such as a cathode ray tube (CRT) or liquid crystal display (LCD), is projected onto a visor (shield) connected to the helmet which the pilot puts on his/her head and is reflected toward the pilot to create a display image in the form of a virtual image in front of the eyes of the pilot.

Unlike the commonly used helmets for two-wheeled vehicles, the helmets for aircraft (mainly military aircraft) normally have a spherical visor. A likely reason for this design is that the spherical shape is the easiest to fabricate in the case of creating a visor having a high level of dimensional accuracy, i.e. the smallest possible amount of distortion or the like. Another possible reason is that the spherical shape makes it easier to ensure a high level of strength against a large amount of external force due to acceleration. Therefore, the optical system in the HMD for aircraft is configured to reflect display light on a spherical visor.

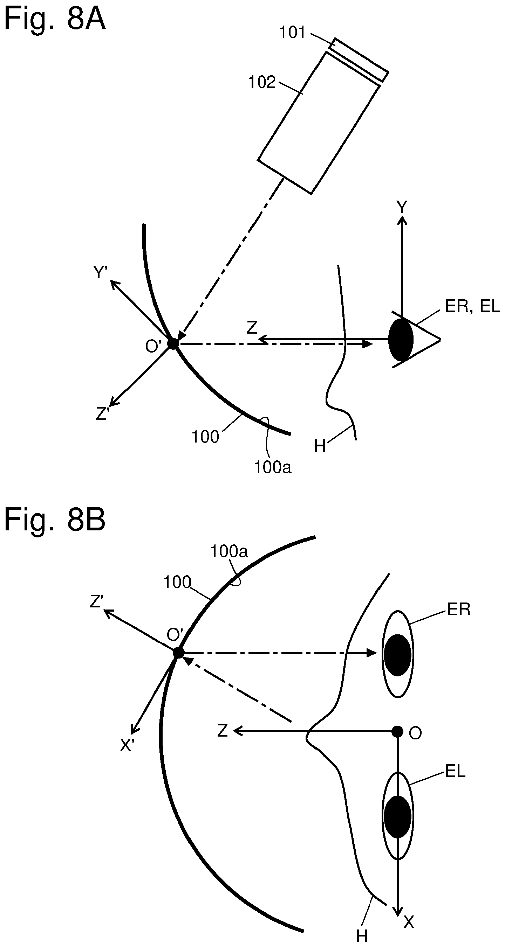

Figs. 8A and 8B are schematic configuration diagrams of an optical system including a visor in a conventional HMD. Specifically, Fig. 8A is a schematic vertical-sectional view, and Fig. 8B is a schematic horizontal-sectional view.

The spherical visor 100 has a sectional shape that is a cutout of a portion of a circle. The visor 100 is connected to a helmet (not shown) in a vertically slidable manner. The helmet covers the head of the user H, leaving an open area in front of the face of the user H. The visor 100 has a reflection surface 100a on its inner surface which faces the user H. The reflection surface 100a has a coating layer which reflects a portion of the display light as well as allows a portion of light from an external world to pass through.

The display light emitted from an image display section 101 which creates a display image is projected through a projection optical system 102 onto a predetermined area of the reflection surface 100a of the visor 100. The thereby reflected light reaches the eyes EL and ER of the user H. A portion of the light coming from the external world and passing through the visor 100 also reaches the eyes EL and ER of the user H. Consequently, a virtual image originating from the display image is superposed on a view of the external scene in front of the eyes of the user H (for example, see Patent Literature 1).

As described in JP 2015-154420 A (referred to herein as "Patent Literature 1"), the projection optical system 102 is normally configured to collimate the display light emitted from the image display section 101 and project the collimated light onto the reflection surface of the visor 100. The optical axis of the bundle of the display light is indicated by the long dashed short dashed line in Figs. 8A and 8B.

In such a type of HMD, as shown in Fig. 8A, the reflection surface 100a of the visor 100 having a cross section shaped like a partial circle is positioned so that the upper portion of the visor 100 is inclined toward the external world with respect to an axis which horizontally extends frontward along the line of sight of the user H (Z axis). Such a positioning inevitably causes astigmatism; the larger the distance from the optical axis to the position at which the display light passes, i.e. the larger the distance from the center of the display image is, the greater the influence of the astigmatism becomes, causing the image to be blurred. The amount of astigmatism particularly increases if the visual field of the display image is expanded. Accordingly, it has been difficult to expand the visual field of the display image in the conventional HMD having the previously described configuration.

JP 2010-19874 A (referred to herein as "Patent Literature 2") discloses an HMD configured to display a virtual image by projecting a display image onto an inner surface (reflection surface) of a shield of a helmet for two-wheeled vehicles. In this case, there is the restriction that the shape of the shield must be similar to that of a conventional and commercial product of a helmet for two-wheeled vehicles (an aspherical shape whose curvature in the vertical direction is extremely smaller, i.e. whose curvature is gentler, than its curvature in the horizontal direction). Therefore, the optical system for projecting the display light onto the shield has a specially devised configuration to enable the display of the virtual image. However, an HMD having such a configuration does not easily allow for an expansion of the visual field. The configuration is also not advantageous for reducing the size and weight.

US5309169 discloses a visor display with fiber optic faceplate correction.

US5543968 discloses a helmet mounted display system.

WO2016/181126 discloses an optical projection system that provides part of a display system.

### SUMMARY OF INVENTION

### TECHNICAL PROBLEM

In general, an HMD for an aircraft often displays critical information for the user to operate the aircraft. Therefore, a high level of visibility is required for a display image with a wide visual field. It is difficult for the conventional aforementioned HMDs to satisfy such a requirement.

The present invention has been developed to solve such a problem. In a head mounted display device for projecting a display image onto a visor placed in front of the eyes of a user, the present invention is primarily aimed at providing a display device in which astigmatism is reduced so that the visual field of the display image can be expanded and a high level of visibility can be realized.

SOLUTION TO PROBLEM

The present invention developed for solving the previously described problem is a head mounted display device as set out in claim 1.

The reflecting surface of the visor may preferably have an aspherical shape whose curvature in the Y'-Z' plane is smaller than the curvature in the X'-Z' plane by an amount corresponding to the difference in optical power due to a difference in the incident angle of the display light to the reflecting surface.

As noted earlier, the reflecting surface of the visor in a conventional HMD for aircraft has a spherical shape. By comparison, the reflecting surface of the visor in the head mounted display device according to the present invention has an aspherical shape whose curvature in the Y'-Z' plane is smaller than the curvature in the X'-Z' plane. However, unlike the HMD disclosed in Patent Literature 2, there is no restriction that the shape of the visor must be the same as that of a commercial product of a helmet. Therefore, it is unnecessary to make the curvature in the vertical direction extremely smaller than the curvature in the horizontal direction, and the difference in optical power between the vertical and horizontal directions on the reflecting surface is small. This allows the curvatures in the Y'-Z' and X'-Z' planes on the reflecting surface to be individually regulated so as to cancel the comparatively small difference in the optical power due to the difference in incident angle of the display light, while having an intermediate image formed in both the vertical and horizontal directions. Consequently, the amount of optical power in the optical path along which the display light reaches the eyes of the user can be roughly equalized in both the vertical and horizontal directions, so that the astigmatism which occurs in the case of a spherical reflecting surface can be reduced.

The head mounted display device according to the present invention is configured to form an intermediate image within the projection optical system or on the optical path between the projection optical system and the reflecting surface in each of the vertical and horizontal directions. According to this configuration, the light is temporarily focused before hitting the reflecting surface, and the light reflected by the reflecting surface eventually reaches the eyes of the user. Therefore, a wide visual field for observation can be realized in both the vertical and horizontal directions. Since the focusing of the beam of display light is performed within the projection optical system or on the optical path between the projection optical system and the reflecting surface, it is easy to avoid the situation in which the head or face of the user interferes with the bundle of light within the helmet which the user puts on. There is also the advantage that the degree of freedom of the arrangement of the optical parts constituting the projection optical system increases, which facilitates the optical design of the display section or projection optical system.

In the head mounted display device according to the present invention, the reflecting surface of the visor may have various shapes as long as they are aspherical.

As one mode of the head mounted display device according to the present invention, the reflecting surface of the visor may be a free-form surface having a plane-symmetrical shape with respect to the Y' axis corresponding to each of the eyes of the user.

As another mode of the head mounted display device according to the present invention, the reflecting surface of the visor may be an aspherical surface which is rotationally symmetrical with respect to a vertex located on a Z-Y plane.

As still another mode of the head mounted display device according to the present invention, the reflecting surface of the visor may be a toroidal surface whose curvature in the Y'-Z' plane is different from the curvature in the X'-Z' plane.

In the case where the head mounted display device according to the present invention is specifically used as an HMD for aircraft, it is necessary to consider not only the visibility of the display image but also the ease of attachment, ease of movement, reduction of the burden on the user's body and other factors.

Accordingly, for example, the head mounted display device according to the present invention may be configured so that the inclination angle of the reflecting surface at the intersection point O' is equal to or larger than 10 degrees, the radius of curvature of the reflecting surface is within the range from 50 to 500 mm in both the Y'-Z' plane and the X'-Z' plane, and the thickness of the visor is within a range from 0.1 to 10 mm.

In the previously described configuration, the visor may preferably have a surface layer formed on its inner surface or outer surface, the surface layer made of a material different from the base material of the visor.

According to this configuration, a reflecting surface which can realize a proper reflection of the light and transmission of the external light can be created regardless of the kind and thickness of the base material of the visor itself.

As a particularly preferable mode of this configuration, a surface layer made of a material different from the base material of the visor may be formed on a surface different from the reflecting surface so as to make the former surface function as a reflection-reducing surface.

According to this configuration, a reflection-reducing surface which can decrease the reflection and suppress a ghost image can be formed regardless of the kind and thickness of the base material of the visor itself.

The helmet to which the visor is connected has a curved shape. Additionally, since the visor must be placed directly opposite to the face of the user, the projection optical system needs to project the display light onto the visor in an oblique direction, avoiding the head and face of the user. Due to these conditions, an image which is asymmetrically blurred is formed. Such a blurred image normally requires optical corrections.

To address this problem, in one mode of the head mounted display device according to the present invention, the projection optical system includes at least one reflection mirror, and the reflecting surface of the reflection mirror has an aspherical shape. The reflecting surface of the reflection mirror in this configuration may preferably be a concave surface. Furthermore, the reflection mirror in the aforementioned configuration may be a back-surface reflection mirror having a refracting effect in addition to the reflecting effect. In this case, the surface having the refracting effect may preferably have an aspherical shape.

In another mode of the head mounted display device according to the present invention, the projection optical system includes at least one lens having a refracting effect on both surfaces, and at least one surface of the lens has an aspherical shape.

With the projection optical system configured in the previously described manner, the asymmetrical blurring of the display image can be corrected to display a satisfactory virtual image in front of the eyes of the user.

The lens in the present configuration may preferably have a refractive index nd equal to or higher than 1.58.

The use of a lens having such a high refractive index increases the optical power and allows for the use of fewer lenses, so that the weight, size, cost and other properties can be reduced.

As a preferable mode of the head mounted display device according to the present invention, the display section may be configured to display information in two or more colors.

With this configuration, for example, it is possible to use one color for the display of normal information and another color for the display of urgent information so as to covey information to the user in a more appropriate and reliable manner.

As one configuration of the head mounted display device according to the present invention, the display section and the projection optical system may be arranged so that the principal ray corresponding to the center of the visual field of the display light emitted from the display section is emitted at an angle which is not orthogonal to the display surface of the display section.

As another configuration of the head mounted display device according to the present invention, the display section and the projection optical system may be arranged so that the principal ray corresponding to the center of the visual field of the display light emitted from the display section is emitted from a position displaced from the center of the display surface of the display section.

By such configurations, a non-coaxial optical system in which the display light follows an optical path that avoids the head and face of the user can be realized.

The display section in the head mounted display device according to the present invention can be configured in various forms.

For example, as one mode of the head mounted display device according to the present invention, the display section may include a transmission-type display element and a backlight illumination unit for illuminating the display element with light from behind.

As another mode of the head mounted display device according to the present invention, the display section may include a reflection-type display element, an illumination section for emitting illumination light, and a reflection-type optical system configured to illuminate the display surface of the display element with the illumination light and to guide the light reflected by the display surface.

As still another mode of the head mounted display device according to the present invention, the display section may include a light-emitting display element, such as an organic electroluminescent display. This configuration does not require an illumination section for illuminating the display element. This simplifies the structure of the display section and is advantageous for reducing the size and weight of the device.

As yet another mode of the head mounted display device according to the present invention, the display section may include a small projector and a small screen.

In this case, the display section may include a transmission-type display element and a backlight illumination unit for illuminating the display element with light from behind, where at least a portion of the backlight illumination unit is a small projector.

In the head mounted display device according to the present invention, two sets of the display sections and the projection optical systems may be respectively provided on the right and left sides corresponding to both eyes of the user, where a portion of the optical elements constituting the right and left projection optical systems is shared for both eyes.

According to this configuration, the number of used optical elements can be reduced by sharing a portion of the optical elements, so that the cost of the device can be reduced.

ADVANTAGEOUS EFFECTS OF INVENTION

In the head mounted display device according to the present invention, the amount of astigmatism which occurs on the reflecting surface of the visor is reduced, so that a display image with a wide visual field can be observed. A high level of visibility can be achieved for both the display image, which is a virtual image, and the view of the external scene. The present invention also increases the degree of freedom of the arrangement of the projection optical system for projecting a display image onto the visor as well as other design elements. This allows the device to be smaller in size and lighter in weight.

BRIEF DESCRIPTION OF DRAWINGS

Figs. 1A and 1B are schematic configuration diagrams of an optical system including a visor in an HMD as one embodiment of the present invention, where Fig. 1A is a schematic vertical-sectional view, and Fig. 1B is a schematic horizontal-sectional view. Fig. 2 is a detailed configuration diagram in the vertical direction of the display section and the projection optical system in the HMD according to the present embodiment.
Fig. 3 is a detailed configuration diagram in the horizontal direction of the display section and the projection optical system in the HMD according to the present embodiment.
Fig. 4 is a perspective view schematically showing an optical path of the display light in the HMD according to the present embodiment.
Fig. 5 is a diagram showing another configuration example of the display section in the HMD according to the present embodiment.
Fig. 6 is a diagram showing another configuration example of the display section in the HMD according to the present embodiment.
Fig. 7 is a diagram showing another configuration example of the display section in the HMD according to the present embodiment.
Figs. 8A and 8B are schematic configuration diagrams of an optical system including a visor in a conventional HMD, where Fig. 1A is a schematic vertical-sectional view, and Fig. 1B is a schematic horizontal-sectional view.

DESCRIPTION OF EMBODIMENTS

An HMD as one embodiment of the head mounted display device according to the present invention is hereinafter described with reference to the attached drawings.

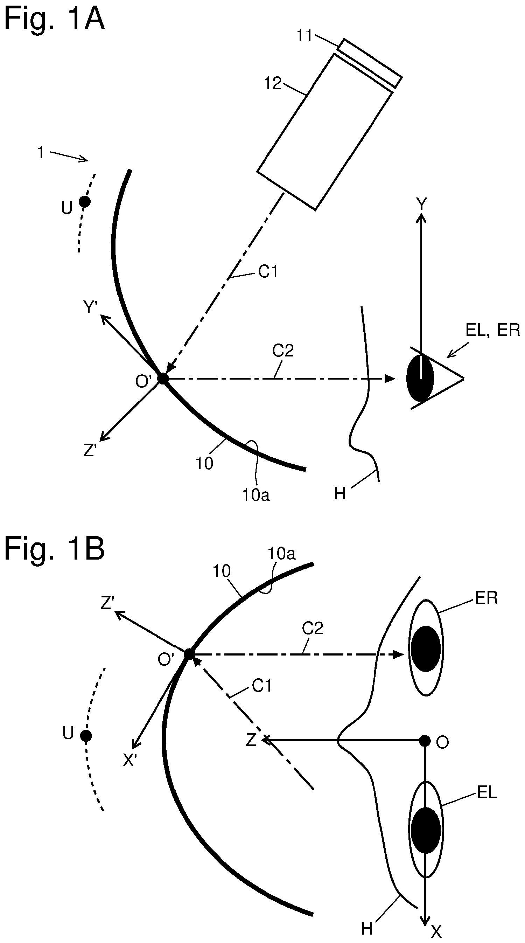

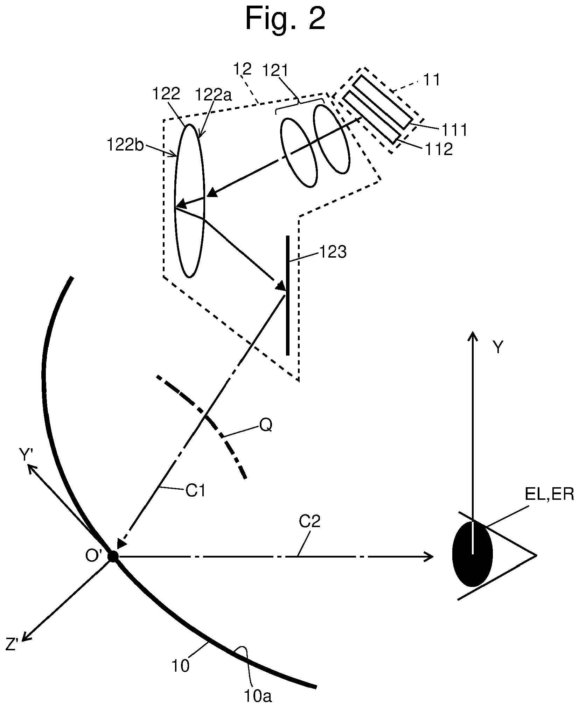

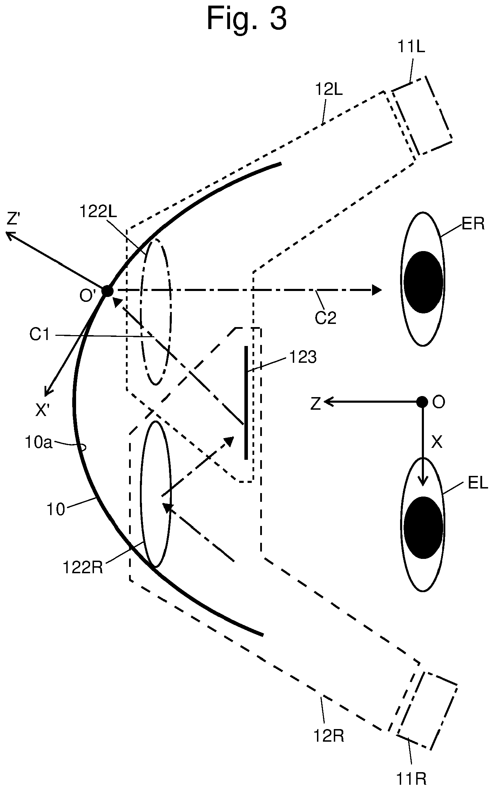

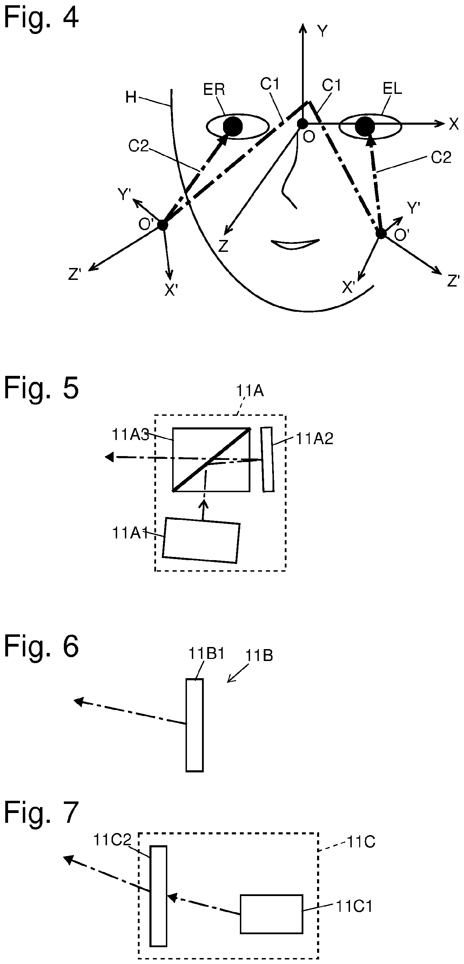

Figs. 1A and 1B are schematic configuration diagrams of an optical system including a visor in the HMD according to the present embodiment, where Fig. 1A is a schematic vertical-sectional view, and Fig. 1B is a schematic horizontal-sectional view. Figs. 2 and 3 are more detailed diagrams showing the configuration of the optical system in Figs. 1A and 1B, respectively. Fig. 4 is a perspective view schematically showing an optical path of the display light. It should be noted that the visor and other components are omitted in Fig. 4.
As a typical use of the HMD 1 according to the present embodiment, the HMD 1 is mounted on the head of a pilot operating an aircraft. The HMD 1 includes a visor 10, an image display section 11, and a projection optical system 12. The visor 10 is connected to a helmet (not shown) in a manner to be rotatable about an axis parallel to the X axis (which will be described later) and vertically slidable. The helmet covers the head of the user H, leaving an open area in front of the face of the user H. The image display section 11 creates a display image based on image data received from an image processing unit (not shown). The projection optical system 12 projects display light containing a display image as a piece of information onto a predetermined area of the visor 10. As shown in Fig. 3, two sets of image display sections 11 and projection optical systems 12 are respectively provided on the left and right sides corresponding to both eyes (left eye EL and right eye ER) of the user H. The display section and the projection optical system for the right eye ER are respectively denoted by reference signs 11R and 12R, while the display section and the projection optical system for the left eye EL are respectively denoted by reference signs 11L and 12L.
The visor 10 has a reflection surface 10a formed on the side which faces the user H. The reflection surface 10a is a coating layer which reflects a portion of the display light while allowing a portion of the light coming from the external world to pass through. This coating layer is made of a material different from the base material of the visor 10. For example, the base material of the visor 10 is polycarbonate, while the coating layer forming the reflection surface 10a is made of a material selected from $SiO$, $SiO_2$, $Al_2O_3$, $MgO$, $Ta_2O_5$, $TiO_2$ and other compounds, or a combination of two or more of those compounds. The thickness of the visor 10, which varies depending on the kind of base material, normally falls within a range from 0.1 to 10 mm.
The two beams of display light containing display images formed by the image display sections 11L and 11R exit from the projection optical systems 12L and 12R, and are projected onto the reflection surface 10a of the visor 10. The thereby reflected beams of light reach the left eye EL and right eye ER of the user H, respectively. A portion of the light coming from the external world and passing through the visor 10 also reaches the eyes EL and ER of the user H. Consequently, a virtual image of the display image is created in front of the eyes of the user H, being superposed on a view of the external scene. The overall configuration of such a basic optical system is the same as before.
For convenience of explanation, the X, Y and Z axes as well as the X', Y' and Z' axes in the present embodiment are defined as follows:
As shown in Figs. 1A, 1B and 4, an central position between the left eye EL and right eye ER of the user H is defined as the origin O. An axis extending from the origin O toward the front side as viewed from the user H is defined as the Z axis. An axis orthogonal to the Z axis and directed upward as viewed from the user H is defined as the Y axis. An axis orthogonal to both the Z axis and the Y axis as well as extending in the left-outward direction as viewed from the user H is defined as the X axis. A point at which the optical axis C1 of a light beam emitted from the optical projection system 12 (12L or 12R) and reaching the visor 10 intersects with the reflecting surface 10a of the visor 10 is defined as the intersection point O'. An axis extending in the direction normal to the visor 10 at the intersection point O' and directed outward as viewed from the user H is defined as the Z' axis. An axis which is orthogonal to the Z' axis and directed so as to form a Y'-Z' plane on which both the optical axis C1 of the light beam before being reflected by the visor 10 and the optical axis C2 of the light beam after the reflection are present. An axis which is orthogonal to both the Y' and Z' axes is defined as the X' axis. The intersection point O' is present for each of the left and right eyes EL and ER. Therefore, the system of X', Y' and Z' axes is also present for each of the left and right eyes, as shown in Fig. 4.

As opposed to the conventional HMD shown in Figs. 8A and 8B in which the reflection surface 100a of the visor 100 has a spherical shape, the reflection surface 10a of the visor 10 in the HMD according to the present embodiment has a rotationally symmetrical and aspherical shape (axially symmetrical aspherical shape) expressed by the following equation (1), with its vertex U located on the Y-Z plane:

$$z = \frac{c\,r^2}{1+\sqrt{1-(1+k)\,c^2\,r^2}} + \sum_{i=1}^{n} A_i\, r^{2i} \quad \cdots(1)$$

$c$ : Curvature
$k$ : Conic Constant
$r^2 = x^2 + y^2$
$A_i$ : Aspheric Coefficient

Since this surface is aspherical, the curvature in the Y'-axis direction at the intersection point O' is different from the curvature in the X'-axis direction. As will be described later, the former curvature is set to be smaller than the latter (i.e. the radius of curvature in the Y'-axis direction is larger than the radius of curvature in the X'-axis direction).

A detailed configuration of the optical system in the HMD according to the present embodiment is hereinafter described.

The visor 10 is connected to a helmet (not shown) in such a manner that it is rotatable about the X axis. As shown in Fig. 1A and 2, when the visor 10 is completely lowered (i.e. when in use), the upper portion of the reflection surface 10a is in an inclined position tilting frontward in front of the eyes of the user H. Its inclination angle at the intersection point O' (the angle formed by the vertical plane and the tangential plane to the reflection surface 10a at the intersection point O') is equal to or larger than 10 degrees.

As shown in Fig. 2, the image display section 11 includes a transmission-type display element 112, such as a transmission-type color liquid crystal display element, and a backlight illumination unit 111. The light emitted from the backlight illumination unit 111 passes through the display surface of the transmission-type display element 112, whereby an image formed on the display surface of the transmission-type display element 112 is emitted as display light. This image is completely symmetrical (i.e. plane-symmetrical with respect to the Y-Z plane). The projection optical system 12 includes a plurality of lenses 121, a back-surface reflection mirror 122 (122L or 122R) with a concave reflection surface, and a flat mirror 123. These components are also completely symmetrical. However, it should be noted that the lenses 121 and the back-surface reflection mirror 122 are independently provided for each of the right and left eyes, while the flat mirror 123 is placed so as to perpendicularly traverse the Y-Z plane and be shared by the two projection optical systems 12L and 12R.

The display light emitted from the image display section 11 passes through the lenses 121 (two lenses are used in Fig. 2, although there is no limitation on the number of lenses) and reaches the back-surface reflection mirror 122. Then, the light is refracted at the refraction surface 122a on the incident side of the back-surface reflection mirror 122 and subsequently reaches the reflection surface 122b, to be reflected by the reflection surface 122b while being focused. The reflected light is once more reflected by the flat mirror 123 into the direction toward the reflection surface 10a of the visor 10. Due to the focusing effect of the reflection surface 122b of the back-surface reflection mirror 122, the reflected light temporarily forms an intermediate image on the optical path between the flat mirror 123 and the reflection surface 10a. The imaging plane on which the intermediate image is formed is denoted by reference sign Q in Fig. 2. At this plane, the intermediate image is formed in both the vertical direction (i.e. in a plane parallel to the Y-Z plane) and the horizontal direction (i.e. in a plane parallel to the X-Z plane). It should be noted that the intermediate image may be formed within the projection optical system 12 including the flat mirror 123 instead of being formed on the optical path between the flat mirror 123 and the reflection surface 10a.

As shown in Fig. 2, the optical axis of the display light emitted from the image display section 11 and incident on the lenses 121 of the projection optical system 12 is not orthogonal to the display surface of the transmission-type display element 112 of the image display section 11. In other words, the configuration of a non-coaxial optical system is adopted. Therefore, a display image which is asymmetrically blurred is formed. To address this problem, at least one of the refraction surface 122a and reflection surface 122b of the back-surface reflection mirror 122, or the lenses 121, are given an aspherical shape so as to correct the aforementioned blurring of the display image.

The display light emitted from the projection optical system 12, or more exactly, the display light which travels from the imaging plane Q of the intermediate image while gradually expanding, hits the reflection surface 10a of the visor 10 and is reflected by the concave surface while being focused. The incident angle of the optical axis of the incident light in the Y'-Z' plane is not the same as that of the optical axis of the incident light in the X'-Z' plane. Therefore, if the reflection surface were spherical, a difference in optical power would occur between these two planes and cause astigmatism. To avoid this problem, in the HMD according to the present embodiment, the curvature of the reflection surface 10a in the Y'-Z' plane is made to be smaller than the curvature in the X'-Z' plane by an amount corresponding to the aforementioned difference in the incident angle of the optical axis of the incident light so that the optical power will be almost equal in both planes. In practice, this difference in curvature is considerably small. The radius of curvature is normally within a range from 50 to 500 mm in both planes.

Since the optical power is made to be almost equal in both the Y'-Z' plane and the X'-Z' plane, the problem of astigmatism is practically eliminated when the beams of display light respectively reach the eyes EL and ER. Accordingly, the user H can observe a display image with a wide visual field in the form of a virtual image in both the vertical and horizontal directions.

The shape of the reflection surface 10a of the visor 10 is not limited to the previously described kind of rotationally symmetrical aspherical shape having point U as its vertex; it may be any shape that is aspherical. For example, it may be shaped like a toroidal surface defined by the following equation (2):

$$z = \sqrt{(Rx - Ry + \sqrt{Ry^2 - y^2})^2 - x^2} \quad \cdots (2)$$

It may also be a free-form shape which is defined by the following equation (3) and is plane-symmetrical with respect to the Y' axis corresponding to each of the eyes EL and ER.

$$z = \sum_{i=0} \sum_{j=0} A_{ij} x^i y^j \quad \cdots (3)$$

$$A_{ij} : \text{Free-Form Surface Coefficient}$$

The configuration of the image display section 11 or projection optical system 12 in the HMD according to the previously described embodiment can be appropriately changed.

Figs. 5-7 are schematic diagrams each of which shows a different configuration example of the display section.

The image display section 11A shown in Fig. 5 includes an illumination section 11A1, a reflection-type display element 11A2 (e.g. reflection-type color liquid crystal display element), as well as a reflection-type optical element 11A3 including a beam splitter and other related components. The light emitted from the illumination section 11A1 is reflected by the reflection-type optical element 11A3 and directed toward the reflection-type display element 11A2. When reflected by the display surface of the reflection-type display element 11A2, the light receives image information formed on the display surface and is eventually emitted through the reflection-type display element 11A3 to the outside as the display light.

The image display section 11B shown in Fig. 6 includes a light-emitting display element 11B1, such as an organic electroluminescent display. According to this configuration, it is unnecessary to provide a separate illumination section, since the display element 11B1 itself emits light and produces display light.

The image display section 11C shown in Fig. 7 includes a small projector 11C1 and a small screen 11C2. The display light emitted from the small projector 11C1 is projected onto the small screen 11C2 and forms an enlarged version of the display image on the small screen 11C2. The display image on this small screen 11C2 is directly emitted as the display light.

In the configuration of the previously described embodiment shown in Fig. 2, a display image which is effectively a colored image or an image with two or more colors can be created by using a monochromatic display element as the display element 112 and a small projector emitting colored light or light with two or more colors as the backlight illumination unit 111.

The previously described embodiment is a mere example of the present invention. Its variations are not limited to the already described ones. The present invention is defined the appended claims.

REFERENCE SIGNS LIST

1 ... Helmet Mounted Display (HMD)

10 ... Visor

10a ... Reflection Surface

11, 11A, 11B, 11C, 11L, 11R ... Image Display Section

111 ... Backlight Illumination Unit

112 ... Transmission-Type Display Element

12, 12L, 12R ... Projection Optical System

121 ... Lens

122 (122L, 122R) ... Back-Reflection Mirror

122a ... Refraction Surface

122b ... Reflection Surface

123 ... Flat Mirror

C1 ... Optical Axis of Bundle of Incident Light

C2 ... Optical Axis of Bundle of Outgoing Light

EL ... Left Eye

ER ... Right Eye

H ... User

**Claims**

1. A head mounted display device (1) comprising: a helmet to be mounted on a head of a user; a visor (10) connected to the helmet, the visor having a curved surface protruding outward and configured to be placed in front of eyes (EL, ER) of the user; a display section (11, 11A, 11B, 11C, 11L, 11R) for creating a display image; and a projection optical system (12, 12L, 12R) for projecting display light onto a reflecting surface (10a) of the visor, the display light containing, as a piece of information, the display image created by the display section, the head mounted display device configured to create a virtual image originating from the display image within a view of an external scene that is visible through the visor, wherein:

   an intermediate image is formed within the projection optical system or on an optical path between the projection optical system and the reflecting surface;
   the visor is rotatable with respect to the helmet about an axis parallel to an X axis and is slidable upward to allow the user to put the helmet on or remove the helmet, while an upper portion of the reflecting surface is held in an inclined position tilting outward in front of the eyes of the user when the visor is in use; and
   the reflecting surface of the visor has an aspherical shape whose curvature in a Y'-Z' plane is smaller than the curvature in an X'-Z' plane, where:
   a central position between the right and left eyes of the user facing horizontally frontward is defined as an origin O; an axis extending frontward from the origin O as viewed from the user is defined as the Z axis; an axis orthogonal to the Z axis and directed upward as viewed from the user is defined as the Y axis; an axis orthogonal to both the Z axis and the Y axis is defined as the X axis; a point at which an optical axis of a light beam incident on the reflecting surface of the visor intersects with the reflecting surface is defined as an intersection point O'; a normal to the reflecting surface at the intersection point O' is defined as the Z' axis; an axis which is orthogonal to the Z' axis and forms, with the Z' axis, a plane containing the optical axis of the incident light beam and an optical axis of an outgoing light beam resulting from the incident light beam reflected by the reflecting surface and travelling toward an eye of the user, is defined as the Y' axis; and an axis orthogonal to both the Y' axis and the Z' axis is defined as the X' axis.

2. The head mounted display device according to claim 1, wherein:
   the reflecting surface (10a) of the visor has an aspherical shape whose curvature in the Y'-Z' plane is smaller than the curvature in the X'-Z' plane by an amount corresponding to a difference in optical power due to a difference in the incident angle of the display light to the reflecting surface.

3. The head mounted display device according to claim 1, wherein:
   the reflecting surface (10a) of the visor is a free-form surface having a plane-symmetrical shape with respect to the Y' axis corresponding to each of the eyes of the user.

4. The head mounted display device according to claim 1, wherein:
   the reflecting surface (10a) of the visor is an aspherical surface which is rotationally symmetrical with respect to a point located on a Z-Y plane.

5. The head mounted display device according to claim 1, wherein:
   the reflecting surface (10a) of the visor is a toroidal surface whose curvature in the Y'-Z' plane is different from the curvature in the X'-Z' plane.

6. The head mounted display device according to claim 1, wherein:
   an inclination angle of the reflecting surface (10a) at the intersection point O' is equal to or larger than 10 degrees, a radius of curvature of the reflecting surface (10a) is within a range from 50 to 500 mm in both the Y'-Z' plane and the X'-Z' plane, and a thickness of the visor is within a range from 0.1 to 10 mm.

7. The head mounted display device according to claim 6, wherein:
   the visor (10) has a surface layer formed on an inner surface or outer surface, the surface layer made of a material different from a base material of the visor.

8. The head mounted display device according to claim 1, wherein:
the projection optical system (12, 12L, 12R) includes at least one reflection mirror (122), and a reflecting surface (122b) of the reflection mirror has an aspherical shape.

9. The head mounted display device according to claim 8, wherein:
the reflecting surface (122b) of the reflection mirror is a concave surface.

10. The head mounted display device according to claim 9, wherein:
the reflection mirror (122) is a back-surface reflection mirror having a refracting effect in addition to a reflecting effect.

11. The head mounted display device according to claim 10, wherein:
the surface (122a) having the refracting effect has an aspherical shape.

12. The head mounted display device according to claim 1, wherein:
the projection optical system (12, 12L, 12R) includes at least one lens (121) having a refracting effect on both surfaces, and at least one surface of the lens has an aspherical shape.

13. The head mounted display device according to claim 12, wherein:
the lens (121) has a refractive index nd equal to or higher than 1.58.

14. The head mounted display device according to claim 1, wherein:
the display section (11, 11A, 11B, 11C, 11L, 11R) is configured to display information in two or more colors.

15. The head mounted display device according to claim 1, wherein:
the display section (11, 11A, 11B, 11C, 11L, 11R) and the projection optical system (12, 12L, 12R) are arranged so that a principal ray corresponding to a center of a visual field of the display light emitted from the display section is emitted at an angle which is not orthogonal to the display surface of the display section.

16. The head mounted display device according to claim 1, wherein:
the display section (11, 11A, 11B, 11C, 11L, 11R) and the projection optical system (12, 12L, 12R) are arranged so that a principal ray corresponding to a center of a visual field of the display light emitted from the display section is emitted from a position displaced from a center of the display surface of the display section.

17. The head mounted display device according to claim 1, wherein:
the display section(11, 11A, 11B, 11C, 11L, 11R) includes a transmission-type display element (112) and a backlight illumination unit (111) for illuminating the display element with light from behind.

18. The head mounted display device according to claim 1, wherein:
the display section (11, 11A, 11B, 11C, 11L, 11R) includes a reflection-type display element (11A2), an illumination section (11A1) for emitting illumination light, and a reflection-type optical system (11A3) configured to illuminate the display surface of the display element with the illumination light and to guide the light reflected by the display surface.

19. The head mounted display device according to claim 1, wherein:
the display section (11, 11A, 11B, 11C, 11L, 11R) includes a light-emitting display element (11B1).

20. The head mounted display device according to claim 1, wherein:
the display section (11, 11A, 11B, 11C, 11L, 11R) includes a small projector (11C1) and a small screen (11C2).

21. The head mounted display device according to claim 14, wherein:
the display section (11, 11A, 11B, 11C, 11L, 11R) includes a transmission-type display element and a backlight illumination unit for illuminating the display element with light from behind, where at least a portion of the backlight illumination unit is a small projector.

22. The head mounted display device according to claim 1, wherein:
two sets of the display sections (12L, 12R) and the projection optical systems (11L, 11R) are respectively provided on right and left sides corresponding to both eyes of the user, where a portion (123) of the optical elements constituting the right and left projection optical systems is shared for both eyes.

**Patentansprüche**

1. Auf dem Kopf befestigte Anzeigevorrichtung (1), die Folgendes umfasst: einen Helm, der auf dem Kopf eines Benutzers zu befestigen ist; ein Visier (10), das mit dem Helm verbunden ist, wobei das Visier eine gekrümmte Oberfläche aufweist, die nach außen vorsteht, und konfiguriert ist, um vor Augen (EL, ER) des Benutzers angeordnet zu sein; einen Anzeigeabschnitt (11, 11A, 11B, 11C, 11L, 11R) zum Erzeugen eines Anzeigebilds; und ein optisches Projektionssystem (12, 12L, 12R) zum Projizieren von Anzeigelicht auf eine reflektierende Oberfläche (10a) des Visiers, wobei das Anzeigelicht das vom Anzeigeabschnitt erzeugte Anzeigebild als eine Information enthält, wobei die auf dem Kopf befestigte Anzeigevorrichtung ausgelegt ist, um ein vom Anzeigebild stammendes virtuelles Bild innerhalb einer Sicht auf eine Außenszene, die über das Visier sichtbar ist, zu erzeugen, wobei:

ein Zwischenbild innerhalb des optischen Projektionssystems oder auf einem optischen Pfad zwischen dem optischen Projektionssystem und der reflektierenden Oberfläche ausgebildet wird;

das Visier in Bezug auf den Helm um eine zu einer X-Achse parallele Achse rotierbar und nach oben gleitbar ist, um es dem Benutzer zu ermöglichen, den Helm aufzusetzen oder abzunehmen, während, wenn das Visier in Verwendung ist, ein oberer Abschnitt der reflektierenden Oberfläche in einer geneigten Position vor den Augen des Benutzers nach außen gekippt gehalten wird; und

die reflektierende Oberfläche des Visiers eine asphärische Form aufweist, deren Krümmung in einer Y'-Z'-Ebene geringer ist als die Krümmung in einer X'-Z'-Ebene, wobei:

eine zentrale Position zwischen dem rechten und dem linken Auge des Benutzers, die horizontal nach vorne gerichtet sind, als Ursprung O definiert ist; eine Achse, die sich vom Ursprung O aus Sicht des Benutzers nach vorne erstreckt, als die Z-Achse definiert ist; eine zur Z-Achse orthogonale und aus Sicht des Benutzers nach oben gerichtete Achse als die Y-Achse definiert ist; eine zu sowohl der Z-Achse als auch der Y-Achse orthogonale Achse als die X-Achse definiert ist, ein Punkt, an dem eine optische Achse eines Lichtstrahls, der auf die reflektierende Oberfläche des Visiers einfällt, die reflektierende Fläche schneidet, als ein Schnittpunkt O' definiert ist; eine Normale auf die reflektierende Fläche am Schnittpunkt O' als die Z'-Achse definiert ist; eine Achse, die orthogonal zur Z'-Achse ist und mit der Z'-Achse eine Ebene bildet, die die optische Achse des einfallenden Lichtstrahls und eine optische Achse eines ausgehenden Lichtstrahls, der aus dem einfallenden, durch die reflektierende Oberfläche reflektierten Lichtstrahl resultiert und zu einem Auge des Benutzers verläuft, enthält, als die Y'-Achse definiert ist; und eine zu sowohl der Y'-Achse als auch zur Z'-Achse orthogonale Achse als die X'-Achse definiert ist.

2. Auf dem Kopf befestigte Anzeigevorrichtung nach Anspruch 1, wobei
die reflektierende Oberfläche (10a) des Visiers eine asphärische Form aufweist, deren Krümmung in der Y'-Z'-Ebene geringer ist als die Krümmung in der X'-Z'-Ebene, und zwar um ein Ausmaß, das einer Differenz der Brechkraft aufgrund der Differenz zwischen dem Einfallswinkel des Anzeigelichts und der reflektierenden Oberfläche entspricht.

3. Auf dem Kopf befestigte Anzeigevorrichtung nach Anspruch 1, wobei
die reflektierende Oberfläche (10a) des Visiers eine Freiformoberfläche ist, die eine ebenensymmetrische Form in Bezug auf die Y'-Achse aufweist, die jedem der Augen des Benutzers entspricht.

4. Auf dem Kopf befestigte Anzeigevorrichtung nach Anspruch 1, wobei:
die reflektierende Oberfläche (10a) des Visiers eine asphärische Oberfläche ist, die in Bezug auf einen auf einer Z-Y-Ebene angeordneten Punkt rotationssymmetrisch ist.

5. Auf dem Kopf befestigte Anzeigevorrichtung nach Anspruch 1, wobei:
die reflektierende Oberfläche (10a) des Visiers eine toroidale Oberfläche ist, deren Krümmung in der Y'-Z'-Ebene sich von der Krümmung in der X'-Z'-Ebene unterscheidet.

6. Auf dem Kopf befestigte Anzeigevorrichtung nach Anspruch 1, wobei:
ein Neigungswinkel der reflektierenden Oberfläche (10a) im Schnittpunkt O' gleich oder größer 10 Grad ist, ein Krümmungsradius der reflektierenden Oberfläche (10a) innerhalb eines Bereichs von 50 bis 500 mm sowohl in der Y'-Z'-Ebene als auch der X'-Z'-Ebene liegt und die Dicke des Visiers im Bereich von 0,1 bis 10 mm liegt.

7. Auf dem Kopf befestigte Anzeigevorrichtung nach Anspruch 6, wobei.
das Visier (10) eine Oberflächenschicht aufweist, die auf einer Innenfläche oder Außenfläche ausgebildet ist, wobei die Oberflächenschicht aus einem Material hergestellt ist, die sich vom Basismaterial des Visiers unterscheidet.

8. Auf dem Kopf befestigte Anzeigevorrichtung nach Anspruch 1, wobei das optische Projektionssystem (12, 12L, 12R) zumindest einen Reflexionsspiegel (122) umfasst und eine reflektierende Oberfläche (122b) eine asphärische Form aufweist.

9. Auf dem Kopf befestigte Anzeigevorrichtung nach Anspruch 8, wobei:
   die reflektierende Oberfläche (122b) des Reflexionsspiegels eine konkave Oberfläche ist.

10. Auf dem Kopf befestigte Anzeigevorrichtung nach Anspruch 9, wobei:
    der Reflexionsspiegel (122) ein Rückseiten-Reflexionsspiegel ist, der zusätzlich zu einem Reflexionseffekt einen Brechungseffekt aufweist.

11. Auf dem Kopf befestigte Anzeigevorrichtung nach Anspruch 10, wobei:
    die Oberfläche (122a), die den Brechungseffekt aufweist, eine asphärische Form aufweist.

12. Auf dem Kopf befestigte Anzeigevorrichtung nach Anspruch 1, wobei:
    das optische Projektionssystem (12, 12L, 12R) zumindest eine Linse (121) umfasst, die auf beiden Oberflächen einen Brechungseffekt aufweist, und wobei zumindest eine Oberfläche der Linse eine asphärische Form aufweist.

13. Auf dem Kopf befestigte Anzeigevorrichtung nach Anspruch 12, wobei:
    die Linse (121) einen Brechungsindex nd gleich oder größer als 1,58 aufweist.

14. Auf dem Kopf befestigte Anzeigevorrichtung nach Anspruch 1, wobei:
    der Anzeigeabschnitt (11, 11A, 11B, 11C, 11L, 11R) ausgelegt ist, um Informationen in zwei oder mehreren Farben anzuzeigen.

15. Auf dem Kopf befestigte Anzeigevorrichtung nach Anspruch 1, wobei:
    der Anzeigeabschnitt (11, 11A, 11B, 11C, 11L, 11R) und das optische Projektionssystem (12, 12L, 12R) so angeordnet sind, dass ein Hauptstrahl, der der Mitte eines Sichtfelds des aus dem Anzeigeabschnitt emittierten Anzeigelichts entspricht, in einem Winkel emittiert wird, der nicht orthogonal zur Anzeigefläche des Anzeigeabschnitts ist.

16. Auf dem Kopf befestigte Anzeigevorrichtung nach Anspruch 1, wobei:
    der Anzeigeabschnitt (11, 11A, 11B, 11C, 11L, 11R) und das optische Projektionssystem (12, 12L, 12R) so angeordnet sind, dass ein Hauptstrahl, der der Mitte eines Sichtfelds des aus dem Anzeigeabschnitt emittierten Anzeigelichts entspricht, aus einer Position emittiert wird, die vom Mittelpunkt der Anzeigefläche des Anzeigeabschnitts versetzt ist.

17. Auf dem Kopf befestigte Anzeigevorrichtung nach Anspruch 1, wobei:
    der Anzeigeabschnitt (11, 11A, 11B, 11C, 11L, 11R) ein Anzeigeelement (112) vom Transmissionstyp und eine Rückseiten-Beleuchtungseinheit (111) zum Beleuchten des Anzeigeelements mit Licht von hinten umfasst.

18. Auf dem Kopf befestigte Anzeigevorrichtung nach Anspruch 1, wobei:
    der Anzeigeabschnitt (11, 11A, 11B, 11C, 11L, 11R) ein Anzeigeelement (11A2) vom Reflexionstyp, einen Beleuchtungsabschnitt (11A1) zum Emittieren von Beleuchtungslicht und ein optisches System (11A3) zum Reflexionstyp umfasst, das ausgelegt ist, um die Anzeigefläche des Anzeigeelements mit dem Beleuchtungslicht zu beleuchten und das von der Anzeigefläche reflektierte Licht zu lenken.

19. Auf dem Kopf befestigte Anzeigevorrichtung nach Anspruch 1, wobei:
    der Anzeigeabschnitt (11, 11A, 11B, 11C, 11L, 11R) ein lichtemittierendes Anzeigeelement (11B1) umfasst.

20. Auf dem Kopf befestigte Anzeigevorrichtung nach Anspruch 1, wobei:
    der Anzeigeabschnitt (11, 11A, 11B, 11C, 11L, 11R) einen kleinen Projektor (11C1) und einen kleinen Bildschirm (11C2) umfasst.

21. Auf dem Kopf befestigte Anzeigevorrichtung nach Anspruch 14, wobei:
    der Anzeigeabschnitt (11, 11A, 11B, 11C, 11L, 11R) ein Anzeigeelement vom Transmissionstyp und eine Rückseiten-Beleuchtungseinheit zum Beleuchten des Anzeigeelements mit Licht von hinten umfasst, wobei zumindest ein Abschnitt der Rückseiten-Beleuchtungseinheit ein kleiner Projektor ist.

22. Auf dem Kopf befestigte Anzeigevorrichtung nach Anspruch 1, wobei:
    zwei Sätze von Anzeigeabschnitten (12L, 12R) und die optischen Projektionssysteme (11L, 11R) jeweils auf einer linken bzw. einer rechten Seite entsprechend den beiden Augen des Benutzers bereitgestellt sind, wobei ein Abschnitt (123) der optischen Elemente, die das rechte bzw. linke optische Projektionssystem bilden, von beiden Augen gemeinsam benutzt wird.

## Revendications

1. Dispositif visiocasque (1) comprenant : un casque à monter sur la tête d'un utilisateur ; une visière (10) connectée au casque, la visière présentant une surface incurvée faisant saillie vers l'extérieur et configurée pour être placée devant les yeux (EL, ER) de l'utilisateur ; une section d'affichage (11, 11A, 11B, 11C, 11L, 11R) pour créer une image d'affichage ;

et un système optique de projection (12, 12L, 12R) pour projeter une lumière d'affichage sur une surface réfléchissante (10a) de la visière, la lumière d'affichage contenant, en tant que pièce d'information, l'image d'affichage créée par la section d'affichage, le dispositif visiocasque étant configuré pour créer une image virtuelle provenant de l'image d'affichage dans une vue d'une scène externe qui est visible à travers la visière, dans lequel :

une image intermédiaire est formée à l'intérieur du système optique de projection ou sur un trajet optique entre le système optique de projection et la surface réfléchissante ;

la visière peut tourner par rapport au casque autour d'un axe parallèle à un axe X et peut coulisser vers le haut pour permettre à l'utilisateur de mettre le casque ou de retirer le casque, tandis qu'une partie supérieure de la surface réfléchissante est maintenue dans une position inclinée en pente vers l'extérieur devant les yeux de l'utilisateur lorsque la visière est utilisée ; et la surface réfléchissante de la visière présente une forme asphérique dont la courbure dans un plan Y'-Z' est inférieure à la courbure dans un plan X'-Z',

où :

une position centrale entre les yeux droit et gauche de l'utilisateur orientés horizontalement vers l'avant est définie comme une origine o ; un axe s'étendant vers l'avant à partir de l'origine O tel que vu par l'utilisateur, est défini comme l'axe Z ; un axe orthogonal à l'axe Z et dirigé vers le haut tel que vu par l'utilisateur est défini comme l'axe Y ; un axe orthogonal à la fois à l'axe Z et à l'axe Y est défini comme l'axe X ; un point au niveau duquel un axe optique d'un faisceau lumineux incident sur la surface réfléchissante de la visière recoupe la surface réfléchissante est défini comme un point d'intersection O'; une normale à la surface réfléchissante au niveau du point d'intersection O' est définie comme l'axe Z'; un axe qui est orthogonal à l'axe Z' et forme, avec l'axe Z', un plan contenant l'axe optique du faisceau lumineux incident et un axe optique d'un faisceau lumineux sortant résultant du faisceau lumineux incident réfléchi par la surface réfléchissante et se déplaçant vers un œil de l'utilisateur est défini comme l'axe Y' ; et un axe orthogonal à la fois à l'axe Y' et à l'axe Z' est défini comme l'axe X'.

2. Dispositif de visiocasque selon la revendication 1, dans lequel
la surface réfléchissante (10a) de la visière présente une forme asphérique dont la courbure dans le plan Y'-Z' est inférieure à la courbure dans le plan X'-Z' d'une quantité correspondant à une différence de puissance optique due à une différence dans l'angle incident de la lumière d'affichage par rapport à la surface réfléchissante.

3. Dispositif de visiocasque selon la revendication 1, dans lequel
la surface réfléchissante (10a) de la visière est une surface de forme libre présentant une forme symétrique plane par rapport à l'axe Y' correspondant à chacun des yeux de l'utilisateur.

4. Dispositif de visiocasque selon la revendication 1, dans lequel
la surface réfléchissante (10a) de la visière est une surface asphérique qui est symétrique en rotation par rapport à un point situé sur un plan Z-Y.

5. Dispositif de visiocasque selon la revendication 1, dans lequel
la surface réfléchissante (10a) de la visière est une surface toroïdale dont la courbure dans le plan Y' Z' est différente de la courbure dans le plan X'-Z'.

6. Dispositif de visiocasque selon la revendication 1, dans lequel
un angle d'inclinaison de la surface réfléchissante (10a) au niveau du point d'intersection O' est égal ou supérieur à 10 degrés, un rayon de courbure de la surface réfléchissante (10a) se situe dans une plage de 50 à 500 mm à la fois dans le plan Y'-Z' et dans le plan X'-Z', et une épaisseur de la visière se situe dans une plage de 0,1 à 10 mm.

7. Dispositif de visiocasque selon la revendication 6, dans lequel
la visière (10) présente une couche superficielle formée sur une surface intérieure ou une surface extérieure, la couche superficielle étant constituée d'un matériau différent d'un matériau de base de la visière.

8. Dispositif de visiocasque selon la revendication 1, dans lequel
le système optique de projection (12, 12L, 12R) inclut au moins un miroir réfléchissant (122), et une surface réfléchissante (122b) du miroir réfléchissant présente une forme asphérique.

9. Dispositif de visiocasque selon la revendication 8, dans lequel
la surface réfléchissante (122b) du miroir réfléchissant est une surface concave.

10. Dispositif de visiocasque selon la revendication 9, dans lequel
le miroir de réflexion (122) est un miroir de réflexion de surface arrière présentant un effet de réfraction en plus d'un effet de réflexion.

**11.** Dispositif de visiocasque selon la revendication 10, dans lequel
la surface (122a) présentant l'effet de réfraction présente une forme asphérique.

**12.** Dispositif de visiocasque selon la revendication 1, dans lequel
le système optique de projection (12, 12L, 12R) comprend au moins une lentille (121) présentant un effet de réfraction sur les deux surfaces, et au moins une surface de la lentille présente une forme asphérique.

**13.** Dispositif de visiocasque selon la revendication 12, dans lequel
la lentille (121) présente un indice de réfraction nd supérieur ou égal à 1,58.

**14.** Dispositif de visiocasque selon la revendication 1, dans lequel
la section d'affichage (11, 11A, 11B, 11C, 11L, 11R) est configurée pour afficher des informations en deux couleurs ou plus.

**15.** Dispositif de visiocasque selon la revendication 1, dans lequel
la section d'affichage (11, 11A, 11B, 11C, 11L, 11R) et le système optique de projection (12, 12L, 12R) sont agencés de telle sorte qu'un rayon principal correspondant à un centre d'un champ visuel de la lumière d'affichage émise à partir de la section d'affichage est émis selon un angle qui n'est pas orthogonal à la surface d'affichage de la section d'affichage.

**16.** Dispositif de visiocasque selon la revendication 1, dans lequel
la section d'affichage (11, 11A, 11B, 11C, 11L, 11R) et le système optique de projection (12, 12L, 12R) sont agencés de telle sorte qu'un rayon principal correspondant à un centre d'un champ visuel de la lumière d'affichage émise à partir de la section d'affichage est émis à partir d'une position déplacée à partir d'un centre de la surface d'affichage de la section d'affichage.

**17.** Dispositif de visiocasque selon la revendication 1, dans lequel
la section d'affichage (11, 11A, 11B, 11C, 11L, 11R) inclut un élément d'affichage de type transmission (112) et une unité d'éclairage de rétroéclairage (111) pour éclairer l'élément d'affichage avec de la lumière provenant de l'arrière.

**18.** Dispositif de visiocasque selon la revendication 1, dans lequel
la section d'affichage (11, 11A, 11B, 11C, 11L, 11R) inclut un élément d'affichage de type réflexion (11A2), une section d'éclairage (11A1) pour émettre une lumière d'éclairage, et un système optique de type réflexion (11A3) configuré pour éclairer la surface d'affichage de l'élément d'affichage avec la lumière d'éclairage et pour guider la lumière réfléchie par la surface d'affichage.

**19.** Dispositif de visiocasque selon la revendication 1, dans lequel
la section d'affichage (11, 11A, 11B, 11C, 11L, 11R) inclut un élément d'affichage électroluminescent (11B1).

**20.** Dispositif de visiocasque selon la revendication 1, dans lequel
la section d'affichage (11, 11A, 11B, 11C, 11L, 11R) inclut un petit projecteur (11C1) et un petit écran (11C2).

**21.** Dispositif de visiocasque selon la revendication 14, dans lequel
la section d'affichage (11, 11A, 11B, 11C, 11L, 11R) inclut un élément d'affichage de type transmission et une unité d'éclairage de rétroéclairage destinée à éclairer l'élément d'affichage avec de la lumière provenant de l'arrière, au moins une partie de l'unité d'éclairage de rétroéclairage étant un petit projecteur.

**22.** Dispositif de visiocasque selon la revendication 1, dans lequel
deux ensembles des sections d'affichage (12L, 12R) et les systèmes optiques de projection (11L, 11R) sont prévus respectivement sur les côtés droit et gauche correspondant aux deux yeux de l'utilisateur, une partie (123) des éléments optiques constituant les systèmes optiques de projection droit et gauche étant partagée pour les deux yeux.

## Fig. 1A

## Fig. 1B

# Fig. 2

# Fig. 3

Fig. 4

Fig. 5

Fig. 6

Fig. 7

Fig. 8A

Fig. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015154420 A
- JP 2010019874 A
- US 5309169 A
- US 5543968 A
- WO 2016181126 A